# EUROPÄISCHE PATENTSCHRIFT

(11) **EP 4 400 761 B1**
(45) Veröffentlichungstag und Bekanntmachung des Hinweises auf die Patenterteilung: **25.02.2026**
(21) Anmeldenummer: 23211267.2
(22) Anmeldetag: 21.11.2023
(51) Int. Cl.: F17C 7/02

(54) **KRYOTANK UMFASSEND EINE ENTNAHMEVORRICHTUNG**
CRYOTANK COMPRISING A REMOVAL DEVICE
RÉSERVOIR CRYOGÉNIQUE COMPRENANT UN DISPOSITIF DE PRÉLÈVEMENT

(30) Priorität: 13.01.2023 DE 102023200257
(43) Veröffentlichungstag der Anmeldung: 17.07.2024
(73) Patentinhaber: MAGNA Energy Storage Systems GesmbH, 8261 Sinabelkirchen (AT)
(72) Erfinder: MOLDENHAUER, Stefan, 98693 Ilmenau (DE); PUTSELYK, Sergiy, 7423 Pinkafeld (AT)
(74) Vertreter: Zangger, Bernd

(56) Entgegenhaltungen:
- EP-B1- 2 118 557
- DE-C5- 19 645 488
- US-A1- 2021 372 570

## Beschreibung

### Gebiet der Erfindung

Die vorliegende Erfindung betrifft einen Kryotank, umfassend eine Entnahmevorrichtung für das im Kryotank gespeicherte Medium, insbesondere Wasserstoff.

### Stand der Technik

Kryotanks, die einen Innentank zur Aufnahme eines Mediums, insbesondere von Wasserstoff, umfassen, einen den Innentank umgebenden Außenbehälter, sowie einen Isolationsraum, insbesondere einen Vakuumraum, zwischen dem Innentank und dem Außenbehälter, sind bekannt. Solche Kryotanks können insbesondere als mobile Kryotanks in Kraftfahrzeugen verwendet werden, zur Mitnahme eines Mediums wie Wasserstoff oder LNG als Kraftstoff für den Antrieb des Kraftfahrzeuges.

Solche Kryotanks umfassen üblicherweise eine Entnahmevorrichtung für das im Kryotank gespeicherte Medium, insbesondere Wasserstoff, so dass über eine Entnahmeleitung das Medium aus dem Innentank heraus zu einem außerhalb des Innentanks angeordneten ersten Wärmeübertrager geleitet wird, um den Wasserstoff zu erwärmen, wobei nach dem ersten Wärmeübertrager das erwärmte Medium einem Verbraucher zugeleitet wird.

Es ist auch bereits bekannt, dass ein Rezirkulier-Teilstrom aus der Entnahmeleitung abgezweigt werden kann und über eine Rezirkulierleitung zurück in den Innentank geleitet werden kann, um das Medium im Tank zu erwärmen und den Druck im Innentank zu erhöhen.

Dabei kann Kryodruckgas (z.B. Wasserstoff bei 30 K) dem Kryotank entnommen und mit Hilfe eines ersten Wärmeübertragers erwärmt werden. Anschließend wird ein erster Teilgasstrom durch ein geschlossenes Rohrleitungssystem in einen Innentankwärmeübertrager im Innentank des Kryotanks rezykliert. Der Innentankwärmeübertrager dient der Verdampfung und damit Entnahme des Kryogases. Die Rezyklierung des Gases führt zu dessen Abkühlung, was durch einen zweiten Wärmeübertrager kompensiert werden kann. Beide Gasströme werden nach deren Vereinigung dem Verbraucher zugeführt. Die teilweise Rezyklierung ermöglicht eine Wärmezufuhr in den Kryotank und damit einen Druckaufbau durch Verdampfung des kryogenen Gases.

Eine derartige Entnahmevorrichtung erfordert eine Installation der Wärmeübertrager im Isolationsvakuum des Kyospeichers, da keine Bauteile deren Temperatur kleiner als 90 K ist, mit Luft in Kontakt kommen dürfen. Wäre dies der Fall, könnte es zu einer Luftsauerstoffkondensation kommen.

Aufgrund des Wärmeübergangs durch Filmsieden im Innentankwärmeübertrager wird der rezyklierte Teilgasstrom üblicherweise nur geringfügig abgekühlt und damit seine Enthalpie nur in geringem Maße geändert. Dies ermöglicht zwar den zweiten Wärmeübertrager deutlich kleiner auszuführen, was allerdings zu Lasten des ersten Wärmeübertragers geht und damit dessen Einfriergefahr erhöht.

Die bekannte Lösung hat demnach mindestens die folgenden Nachteile:
Die Wartung oder Reparatur der Wärmeübertrager wird erschwert oder unmöglich gemacht. Es besteht ein erhöhtes Potential von Undichtheiten im Isolationsvakuum. Komplizierte Leitungsführung im Vakuumraum führt zu schwieriger Applikation von Multi-Layer-Isolation (MLI) bzw. erhöhtem parasitären Wärmeeintrag in den Tank. Es besteht eine Gefahr des Einfrierens der Wärmeübertrager im Isolationsvakuum, insbesondere des ersten Wärmeübertragers, weil dieser üblicherweise mit 30 K kaltem Kryogas beaufschlagt wird. Es besteht die Notwendigkeit zwei stark verschiedene Wärmeübertrager zu verwenden. Es kommt zu einer Verkleinerung des Innentanks, weil Platz für die Wärmeübertrager und Rohrleitungen im Isolationsvakuum benötigt wird.

Die EP 2 118 557 B1 offenbart einen Speicherbehälter für tiefkaltes Flüssiggas mit Entnahmevorrichtung, die aus einem Entnahmezweig und einem Rückführzweig besteht, wobei der Entnahmezweig von einer in den Behälter eintauchenden Entnahmeleitung gebildet ist, die über einen Wärmetauscher und eine Abzweige zum Verbraucher führt und wobei als Rückführzweig eine Rückführleitung von der Abzweige über einen Kompressor zu einer Einblasvorrichtung im Behälter führt, wobei die Rückführleitung im Inneren des Speicherbehälters in Bodennähe einen weiteren Wärmetauscher bildet und im Gasraum des Speicherbehälters mit einer Ausblasöffnung endet.

Aus der US 2021/372570 A1 ist ein Lagersystem zum Lagern eines kryogenen Mediums bekannt, wobei das Lagersystem folgendes umfasst: einen Lagerbehälter zur Aufnahme des kryogenen Mediums; eine Gasentnahmeleitung zur Entnahme von gasförmigem kryogenem Medium aus dem Lagerbehälter; einen ersten Wärmetauscher, der mit der Gasentnahmeleitung in Fluidverbindung steht und außerhalb des Lagerbehälters angeordnet ist, um das kryogene Medium zu erwärmen; einen zweiten Wärmetauscher, der strömungstechnisch mit der Gasentnahmeleitung verbunden ist und stromabwärts des ersten Wärmetauschers und innerhalb des Lagerbehälters angeordnet ist, zum Erhitzen des flüssigen kryogenen Mediums im Lagerbehälter; eine Flüssigkeitsentnahmeleitung zur Entnahme des flüssigen kryogenen Mediums aus dem Lagerbehälter; ein steuerbares erstes Absperrventil, das in der Gasentnahmeleitung angeordnet ist; und ein steuerbares zweites Absperrventil, das in der Flüssigkeitsentnahmeleitung angeordnet ist.

Dokument DE 196 45 488 C5 lehrt ein System zum Entnehmen von kaltem Gas aus einem Kryotank, mit einem isolierten Speicherbehälter für tiefkaltes, verflüssigtes Gas und einer Entnahmeleitung, welche aus dem Speicherbehälter zu einem Verbraucher herausführt, wobei ein Verdampfungsvolumen mit der Entnahmeleitung verbunden ist, wobei flüssiges Gas durch die Entnahmeleitung in das Verdampfungsvolumen gelangt, dort teilweise verdampft und das verdampfte Gas zumindest teilweise über die Entnahmeleitung in den Speicherbehälter zurückströmt, wobei die Entnahmeleitung das einzige Mittel zum Ausgleich eines Druckabfalls beim Entnehmen von kaltem Gas aus dem Kryotank ist.

### Zusammenfassung der Erfindung

Es ist eine Aufgabe der Erfindung, einen Kryotank, umfassend eine Entnahmevorrichtung für das im Kryotank gespeicherte Medium, insbesondere Wasserstoff, anzugeben, der zumindest manche der genannten Nachteile nicht aufweist. Insbesondere soll ein Kryotank angegeben werden, der einen größeren Innentank und eine einfachere Wartung der Wärmeübertrager ermöglicht.

Die Lösung der Aufgabe erfolgt durch einen Kryotank mit den Merkmalen gemäß Anspruch 1.

Der Kryotank umfasst eine Entnahmevorrichtung für das im Kryotank gespeicherte Medium, insbesondere Wasserstoff, wobei der Kryotank einen Innentank zur Aufnahme des Mediums umfasst, einen den Innentank umgebenden Außenbehälter, sowie einen Isolationsraum zwischen dem Innentank und dem Außenbehälter, wobei die Entnahmevorrichtung zumindest eine Entnahmeleitung umfasst, wobei durch die Entnahmeleitung das Medium aus dem Innentank heraus zu einem außerhalb des Innentanks angeordneten und Teil der Entnahmevorrichtung bildenden ersten Wärmeübertrager leitbar ist, wobei nach dem ersten Wärmeübertrager ein Entnahme-Teilstrom zu einem Verbraucher leitbar ist und ein Rezirkulier-Teilstrom über eine Rezirkulierleitung zurück in den Innentank leitbar ist, wobei der erste Wärmeübertrager außerhalb des Außenbehälters angeordnet ist, wobei die Entnahmeleitung und die Rezirkulierleitung im Isolationsraum so ausgebildet sind, dass ein guter thermischer Kontakt zwischen Entnahmeleitung und Rezirkulierleitung besteht.

Erfindungsgemäß verfügt ein Kryotank über eine Entnahmeleitung, zur Entnahme des im Innentank gespeicherten Mediums, um das Medium einem Verbraucher zuzuführen. Von der Entnahmeleitung kann ein Teilstrom abgezweigt werden und in einer Rezirkulierleitung zurück in den Innentank geleitet werden, so dass der inzwischen erwärmte Teilstrom das Medium im Innentank erwärmen kann.

Erfindungsgemäß wird der Kryotank so realisiert, dass der Wärmeübertrager, oder gegebenenfalls sogar mehrere, insbesondere zwei Wärmeübertrager, die der Erwärmung des entnommenen Mediums dienen, im Luftbereich, außerhalb des Außenbehälters und somit außerhalb des Isolationsraums angeordnet werden. Das ist dann technisch sinnvoll möglich, wenn die an den Wärmeübertragern auftretenden Temperaturen oberhalb der Verflüssigungstemperatur von Sauerstoff, das heißt größer als 90 K sind. Um sicher oberhalb dieser Temperatur zu liegen, sollten die Bauteiltemperaturen sogar nicht unter 120 K fallen.

Die Entnahmevorrichtung des erfindungsgemäßen Kryotanks ist daher so ausgebildet, dass das Enthalpieangebot des rezirkulierten Teilgassstroms deutlich stärker ausgenutzt wird. Die Entnahmeleitung und die Rezirkulierleitung sind dafür im Isolationsraum so ausgebildet, dass ein guter thermischer Kontakt zwischen Entnahmeleitung und Rezirkulierleitung besteht. Das Medium in der Rezirkulierleitung kann somit Wärme an das Medium in der Entnahmeleitung abgeben.

Erfindungsgemäß sind die Entnahmeleitung und die Rezirkulierleitung im Isolationsraum dadurch als thermisch gut miteinander verbundene Rohre ausgebildet, dass die Entnahmeleitung und die Rezirkulierleitung zumindest abschnittsweise entlang ihrer Erstreckung durch den Isolationsraum koaxiale Rohre bilden. Eines der beiden Rohre verläuft somit koaxial außerhalb des anderen Rohres.

Vorzugsweise ist die Entnahmeleitung außen geführt und die Rezirkulierleitung innen geführt.

Weiterbildungen der Erfindung sind in den abhängigen Ansprüchen, der Beschreibung sowie den beigefügten Zeichnungen angegeben.

Vorzugsweise sind die Entnahmeleitung und die Rezirkulierleitung im Isolationsraum als thermisch gut miteinander verbundene Rohre ausgebildet. Das Rohr, das die Entnahmeleitung bildet und das Rohr, das die Rezirkulierleitung bildet, können einander berührend angeordnet sein. Bevorzugt weisen die Entnahmeleitung und die Rezirkulierleitung aber zumindest abschnittsweise entlang ihrer Erstreckung durch den Isolationsraum und zumindest entlang eines Sektors ihres Umfangs einen der Entnahmeleitung und der Rezirkulierleitung gemeinsamen Rohrwandabschnitt auf. Die Entnahmeleitung und die Rezirkulierleitung teilen sich somit bevorzugt zumindest einen Teil einer Rohrwandung.

In einer Ausführungsform wird der Rezirkulier-Teilstrom mittels eines Gebläses über die Rezirkulierleitung zurück in den Innentank befördert, und mündet vorzugsweise in Bodennähe in den Innentank, wo sich üblicherweise im Betrieb flüssiges Medium im Innentank befindet, so dass das flüssige kryogene Medium erwärmt wird und verdampft.

Vorzugsweise wird der Rezirkulier-Teilstrom, der über die Rezirkulierleitung zurück in den Innentank geleitet wird, im Innentank durch einen Innentank-Wärmeübertrager geleitet und wird nach dem InnentankWärmeübertrager über einen Sekundärabschnitt der Rezirkulierleitung zu einem außerhalb des Innentanks angeordneten zweiten Wärmeübertrager geleitet. Das rezirkulierte Medium gibt somit seine Wärme über einen Innentank-Wärmeübertrager ab, der vorzugsweise in Bodennähe des Innentanks angeordnet ist und die Wärme im üblichen Betrieb an flüssiges Medium abgibt, und strömt dann weiter, wieder aus dem Innentank heraus, über einen Sekundärabschnitt der Rezirkulierleitung. Der wieder austretende Teilstrom des Mediums wird in einem zweiten Wärmeübertrager erneut erwärmt und kann dann einem Verbraucher zugeführt werden.

Der zweite Wärmeübertrager ist bevorzugt ebenfalls außerhalb des Außenbehälters angeordnet.

Die Entnahmeleitung und der Sekundärabschnitt der Rezirkulierleitung sind im Isolationsraum bevorzugt so ausgebildet, dass ein guter thermischer Kontakt zwischen Entnahmeleitung und Sekundärabschnitt der Rezirkulierleitung besteht. Somit kann ein Wärmeübertrag sowohl vom "primären" Teil der Rezirkulierleitung, als auch vom Sekundärabschnitt der Rezirkulierleitung zur Entnahmeleitung hin erfolgen.

Die Entnahmeleitung und die Rezirkulierleitung und der Sekundärabschnitt der Rezirkulierleitung sind bevorzugt im Isolationsraum als thermisch gut miteinander verbundene Rohre ausgebildet, besonders bevorzugt dadurch, dass die Entnahmeleitung und die Rezirkulierleitung und der Sekundärabschnitt der Rezirkulierleitung zumindest abschnittsweise entlang ihrer Erstreckung zumindest einen Teil einer Rohrwandung jeweils miteinander, oder alle drei Rohre gemeinsam, teilen, und vorzugsweise alle drei Rohre koaxiale Rohre im Isolationsraum bilden.

Die Entnahmeleitung ist dann bevorzugt das zwischen Rezirkulierleitung und Sekundärabschnitt der Rezirkulierleitung eingebettete, mittige Rohr. Die Rezirkulierleitung ist besonders bevorzugt das radial innen liegende, zentrale Rohr.

Die thermisch gut miteinander verbundenen Leitungen, insbesondere Rohre, also die Rohranordnung aus zwei und bevorzugt aus drei Rohren, ist vorzugsweise zumindest teilweise und bevorzugt großteils in einem länglichen, sich in den Innentank hinein erstreckenden Bauraum angeordnet, der topologisch zum Isolationsraum gehört. Um die Rohranordnung ist bevorzugt eine Multi-Layer-Isolation (MLI) angeordnet.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines nicht erfindungsgemäßen Kryotanks.
- Fig. 2: ist eine schematische Darstellung eines erfindungsgemäßen Kryotanks.
- Fig. 3: ist eine schematische Darstellung eines weiteren erfindungsgemäßen Kryotanks.
- Fig. 4: ist eine schematische Darstellung einer Rohranordnung im Isolationsraum eines erfindungsgemäßen Kryotanks, von der Seite (großes Bild) und im Querschnitt von vorne (kleines Bild).
- Fig. 5: ist eine schematische Darstellung einer weiteren Rohranordnung im Isolationsraum eines erfindungsgemäßen Kryotanks, von der Seite (großes Bild) und im Querschnitt von vorne (kleines Bild).
- Fig. 6: ist eine schematische Darstellung einer Anordnung einer Rohranordnung im Isolationsraum eines erfindungsgemäßen Kryotanks.
- Fig. 7: ist eine schematische Darstellung einer weiteren Anordnung einer Rohranordnung im Isolationsraum eines erfindungsgemäßen Kryotanks.
- Fig. 8: ist eine schematische Darstellung eines weiteren erfindungsgemäßen Kryotanks.
- Fig. 9: ist eine schematische Darstellung einer weiteren Rohranordnung im Isolationsraum eines erfindungsgemäßen Kryotanks, von der Seite (großes Bild) und im Querschnitt von vorne (kleines Bild).
- Fig. 10: ist eine schematische Darstellung einer weiteren Rohranordnung im Isolationsraum eines erfindungsgemäßen Kryotanks, von der Seite (großes Bild) und im Querschnitt von vorne (kleines Bild).

### Detaillierte Beschreibung der Erfindung

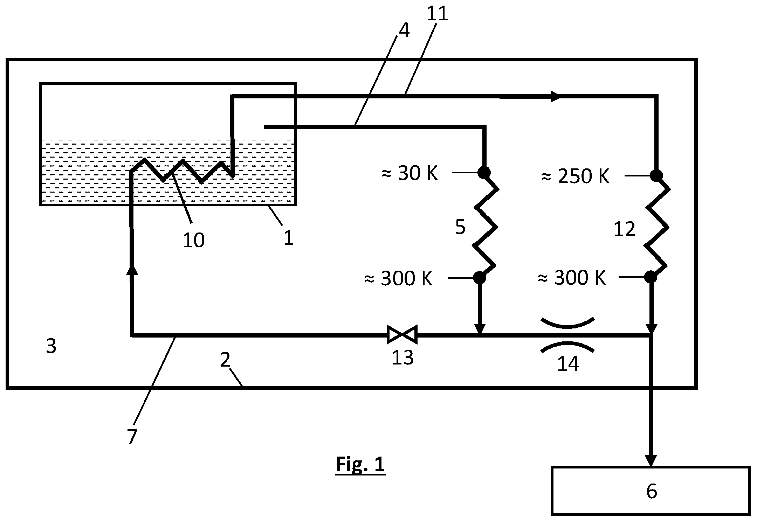

Fig. 1 zeigt einen Kryotank mit einer Entnahmevorrichtung nach dem Stand der Technik.

Der Kryotank umfasst einen Innentank 1 zur Aufnahme eines Mediums, insbesondere Wasserstoff, einen den Innentank 1 umgebenden Außenbehälter 2, sowie einen Isolationsraum 3, nämlich einen Vakuumraum, zwischen dem Innentank 1 und dem Außenbehälter 2. Im Innentank 1 befindet sich im üblichen Betrieb des Kryotanks flüssiger Wasserstoff im unteren Bereich, in Bodennähe des Innentanks 1 (strichliert eingezeichnet) und darüber gasförmiger Wasserstoff.

Der Kryotank umfasst eine Entnahmevorrichtung für das im Kryotank gespeicherte Medium. Die Entnahmevorrichtung umfasst eine Entnahmeleitung 4, wobei durch die Entnahmeleitung 4 das Medium aus dem Innentank 1 heraus zu einem außerhalb des Innentanks 1 angeordneten, nämlich im Isolationsraum 3 angeordneten, ersten Wärmeübertrager 5 geleitet wird. Nach dem ersten Wärmeübertrager 5 wird ein Entnahme-Teilstrom zu einem Verbraucher 6 geleitet. Ein Rezirkulier-Teilstrom wird über eine Rezirkulierleitung 7 zurück in den Innentank 1 geleitet und kann dort über einen Innentank-Wärmeübertrager 10 das gespeicherte Medium erwärmen. Danach wird das in der Rezirkulierleitung 7 befindliche Medium über einen Sekundärabschnitt 11 der Rezirkulierleitung 7 wieder aus dem Innentank 1 heraus in den Isolationsraum 3 geleitet, dort von einem zweiten Wärmeübertrager 12 erwärmt und an den Verbraucher 6 geleitet. Um einen gewünschten Teilstrom für die Rezirkulierung über die Rezirkulierleitung 7 abzweigen zu können, ist in der Rezirkulierleitung 7 ein Ventil 13 angeordnet und zwischen der Abzweigung der Rezirkulierleitung 7 von der Entnahmeleitung 4 und dem Sekundärabschnitt 11 der Rezirkulierleitung 7 eine Drossel 14.

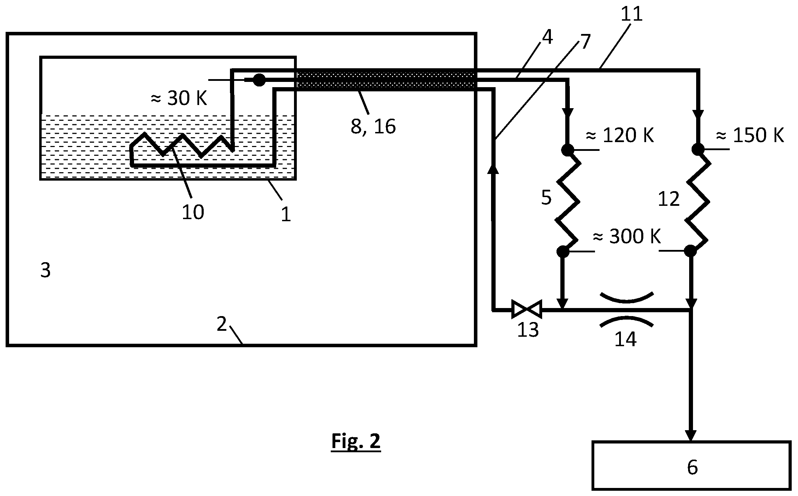

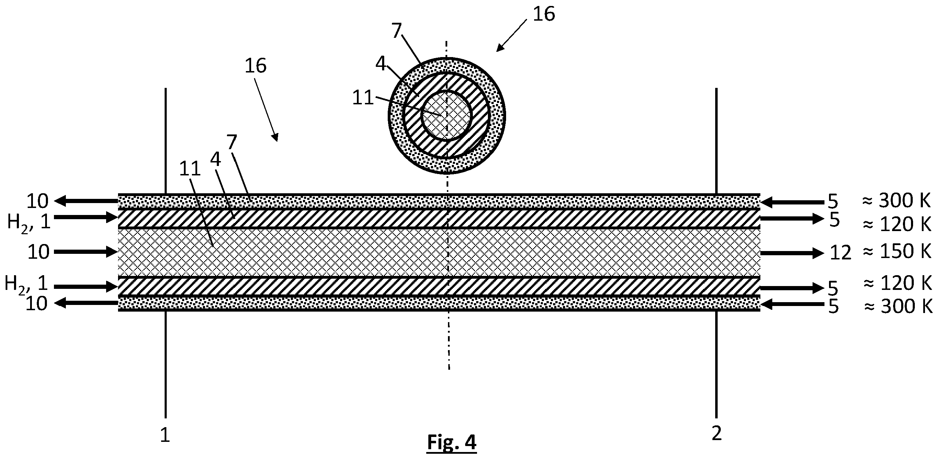

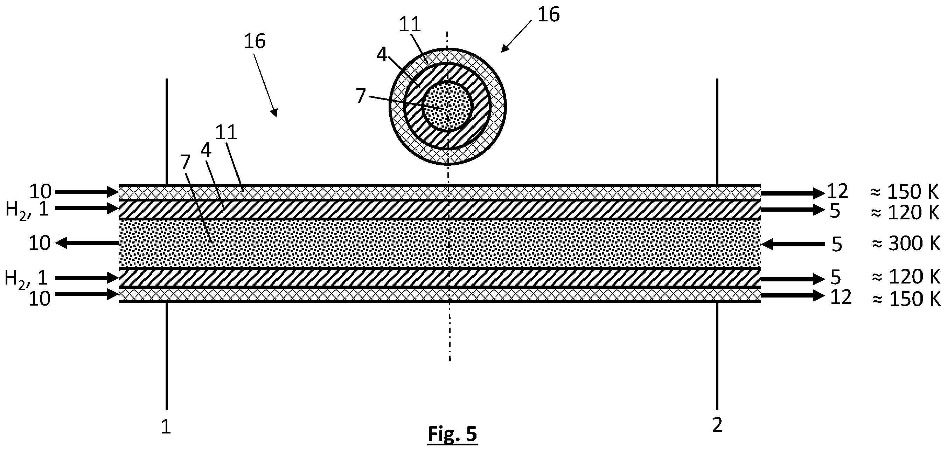

Der erfindungsgemäße Kryotank nach Fig. 2 unterscheidet sich von dem Kryotank der Fig. 1 dadurch, dass der erste Wärmeübertrager 5 und der zweite Wärmeübertrager 12 außerhalb des Außenbehälters 2 angeordnet sind. Die Entnahmeleitung 4, die Rezirkulierleitung 7 und der Sekundärabschnitt 11 der Rezirkulierleitung 7 sind im Isolationsraum 3 so ausgebildet, dass ein guter thermischer Kontakt 8 zwischen Entnahmeleitung 4, Rezirkulierleitung 7 und Sekundärabschnitt 11 der Rezirkulierleitung 7 besteht. Die Entnahmeleitung 4, die Rezirkulierleitung 7 und der Sekundärabschnitt 11 der Rezirkulierleitung 7 bilden im Isolationsraum 3 eine gemeinsame Rohranordnung 16 aus, die durch die Ausbildung von Entnahmeleitung 4, Rezirkulierleitung 7 und Sekundärabschnitt 11 der Rezirkulierleitung 7 als koaxiale Rohre gebildet wird (siehe Fig. 4 und 5).

Kryodruckgas, beispielsweise Wasserstoff bei ca. 30 K, kann dem Kryotank mittels Entnahmeleitung 4 entnommen und mit Hilfe des ersten Wärmeübertragers 5 erwärmt werden. Anschließend wird ein erster Teilgasstrom durch ein geschlossenes Rohrleitungssystem in den Innentank 1 zum Innentank-Wärmeübertrager 10 des Kryotanks rezykliert. Der Innentank-Wärmeübertrager 10 dient der Verdampfung und damit Entnahme des Kryogases. Um die Rezyklierung zu ermöglichen, wird eine Drossel 14 im nicht-rezyklierten zweiten Teilgasstrom verwendet. Das in Fig. 2 eingezeichnete Ventil 13 dient zum Abschalten des rezyklierten ersten Teilgasstroms. Die Rezyklierung des Gases führt zu dessen Abkühlung, was durch den zweiten Wärmeübertrager 12 kompensiert wird. Beide Teilgasströme werden nach deren Vereinigung dem Verbraucher 6 zugeführt. Die teilweise Rezyklierung ermöglicht eine Wärmezufuhr in den Kryotank und damit einen Druckaufbau durch Verdampfung des kryogenen Gases.

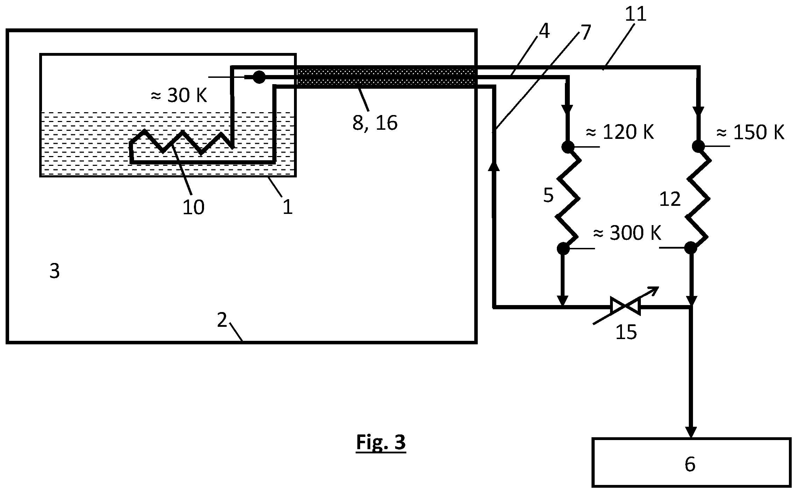

Zentrales Bauteil ist die mit "Thermischen Kontakt" 8 bezeichnete Rohranordnung. Diese kann erstens eine Wärmeübertragung zwischen dem bei ca. 30 K verdampften Kryogas und dem vom ersten Wärmeübertrager 5 zum Innentank-Wärmeübertrager 10 rezirkulierten Teilgasstrom und zweitens eine Wärmeübertragung zwischen dem bei ca. 30 K verdampften Kryogas und dem vom Innentank-Wärmeübertrager 10 zum zweiten Wärmeübertrager 12 rezirkulierten Teilgasstrom ermöglichen. Vorteilhafterweise erfolgt ersteres dabei im Gegenstrom und zweiteres im Gleichstrom (siehe Fig. 4 und 5). Die Kombination von Ventil 13 und Drossel 14 kann, wie in Fig. 3 dargestellt, durch ein Stellventil 15 ersetzt werden, um eine kontinuierliche Regelung des rezirkulierten Teilgasstroms zu ermöglichen.

Die Ausführung des in Fig. 2 und 3 mit "Thermischer Kontakt" 8 bezeichneten Bauteils, also der Rohranordnung 16 (siehe Fig. 4 und 5), erfolgt in einer besonders vorteilhaften Ausführung der erfindungsgemäßen Entnahmevorrichtung durch eine koaxiale Anordnung von drei Rohren. In Fig. 4 und Fig. 5 sind zwei mögliche Ausführungsformen dafür dargestellt, nämlich zwei verschiedene Fluidführungen in koaxialen Rohranordnungen 16.

Es hat sich gezeigt, dass durch die Anordnung nach Fig. 2 und Fig. 3 mit einer Rohranordnung 16 nach Fig. 4 eine Erwärmung des bei ca. 30 K entnommenen Kryogasstroms (Wasserstoff) auf mindestens 120 K möglich wird, bevor dieser den ersten Wärmeübertrager 5 betritt. Der in den zweiten Wärmeübertrager 12 eintretende rezyklierte Teilgasstrom besitzt dann nur noch eine Temperatur von ca. 150 K. Seine Enthalpie ist somit deutlich besser ausgenutzt als bei der Anordnung nach Stand der Technik (vgl. die Angaben der Temperaturen in Fig. 1 - im Vergleich auch zu Fig. 2 und Fig. 3). Eine Installation zweier gleichgroßer Wärmeübertrager 5 und 12 im Luftraum, also außerhalb des Isolationsraums 3, ist somit ohne die Gefahr einer Sauerstoffkondensation möglich.

In Abweichung zur Fluidführung nach Fig. 4 ist eine Fluidführung nach Fig. 5 möglich, wobei der verdampfte Kryogasstrom (in der Entnahmeleitung 4) immer von dem zum Innentank- Wärmeübertrager 10 führenden und vom Innentank- Wärmeübertrager 10 kommenden Teilgasstrom (radial innen und radial außen) umschlossen sein muss. Die Performance einer Fluidführung nach Fig. 4 ist höher als die nach Fig. 5.

Bei der erfindungsgemäßen Entnahmevorrichtung ist darauf zu achten, dass bei einer Kryogasentnahme stets ein ausreichender Teilgasstrom rezirkuliert wird, um durch den Wärmeübergang die Austrittstemperatur des aus dem Vakuumbereich, also Isolationsraum 3, austretenden Kryogases oberhalb der Kondensationstemperatur von Sauerstoff zu halten. Dies ist bei einer Entnahme bei bereits erhöhtem Innentankdruck zu beachten, da in diesem Fall eine Kryogasverdampfung nicht sofort notwendig ist. Es spricht jedoch nichts gegen eine Kryogasrezirkulation mit geringerem Massenstrom, als für eine die Entnahme ausreichende Verdampfung notwendig wäre, um die Austrittstemperatur des entnommenen Kryogases mindestens oberhalb von 90 K zu halten. Der Druckabbau im Innentank 1 geht dann etwas langsamer vor sich, als bei einer Entnahme ohne Rezirkulation. Weiterhin kann eine Kryoflüssigkeitsansammlung in der Entnahmeleitung 4 einen erhöhten Wärmeeintrag durch die koaxiale Rohranordnung erfordern. Aus den beiden genannten Gründen empfiehlt es sich die koaxiale Rohranordnung 16 wärmeübergangstechnisch größer, insbesondere geometrisch länger bzw. lang zu dimensionieren. Die Rohranordnung 16 kann sich beispielsweise über mindestens 40%, bevorzugt mindestens 60 % oder mindestens 70 % der Länge des Innentanks 1 erstrecken.

Ein Entnahmeverfahren für einen Kryotank kann die Schritte umfassen, dass der aus dem Innentank 1 entnommene Kryogasstrom über eine Entnahmeleitung 4 geführt, in einem ersten Wärmeübertrager 5 erwärmt und ein von diesem abgezweigter Teilgasstrom über eine Rezirkulierleitung 7 zurück zum Innentank 1 befördert wird, sowie der zum Innentank 1 geleitete Teilgasstrom einen Innentankwärmeübertrager 10 passiert, anschließend über eine Leitung 11 zu einem zweiten Wärmeübertrager 12 geführt und stromab eines den Hauptgasstrom androsselden Stellventils 15 mit dem Hauptstrom vereinigt wird, wobei der verdampfte, vom Innentank 1 kommende und zum ersten Wärmeübertrager 5 geleitete Kryogasstrom mit dem zum Innentank 1 zugeführten sowie von diesem abgeführten Teilgasstrom in einem thermischen Kontakt steht und es zu einer Wärmeübertragung zwischen den drei Fluidströmen kommt.

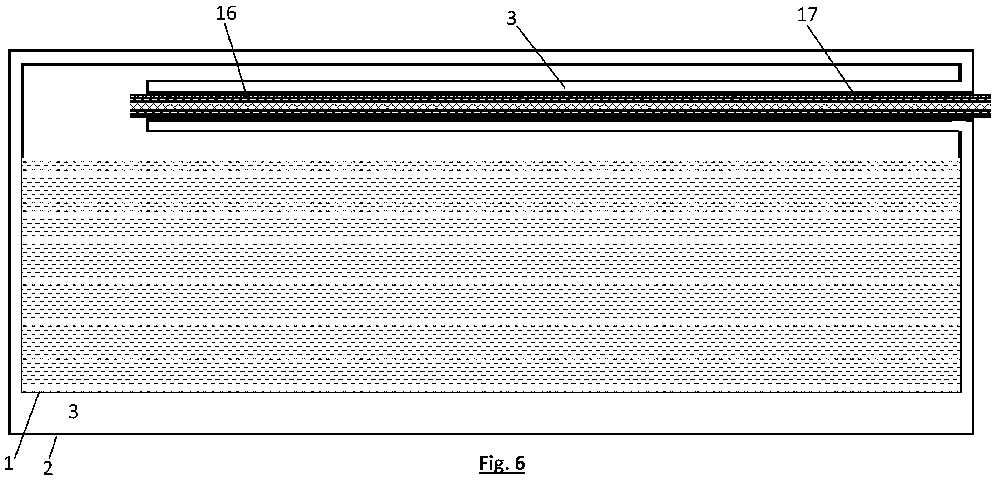

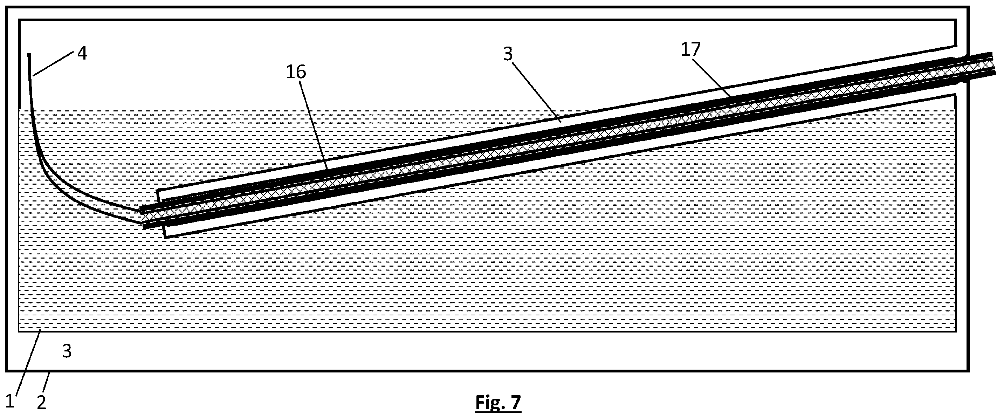

In einer weiteren vorteilhaften Ausführung der erfindungsgemäßen Vorrichtung wird das Isolationsvakuum, also der Isolationsraum 3, um die koaxiale Rohranordnung 16, wie in Fig. 6 und 7 dargestellt, in den Bauraum des Innentanks 1 hineingezogen. Das ermöglicht eine für die Wärmeübertragung ausreichende Länge der koaxialen Rohranordnung 16 in Verbindung mit einer einfach zu installierenden Multi-Layer-Insulation (MLI) 17, da diese auf einem geraden Rohr einfacher zu applizieren ist. Die koaxiale Anordnung der drei Rohre hat zudem gegenüber dem Stand der Technik wie in Fig. 1 dargestellt den Vorteil, dass nur eine Rohrleitung anstatt drei mit MLI versehen werden muss, was den Fertigungsaufwand verringert. In Fig. 6 ist diese Anordnung verdeutlicht, nämlich eine koaxiale Rohranordnung 16 mit in den Innentank 1 hineingezogenem Isolationsraum 3, insbesondere Vakuum, und Multi-Layer-Insulation 17.

Die Rohranordnung 16 kann im Wesentlichen parallel zum Boden des Innentanks 1 verlaufen und kann bevorzugt nahe der Decke, also oben im Innentank 1, angeordnet sein, wie in Fig. 6 dargestellt. Zur Vermeidung einer Flüssigkeitsansammlung in der koaxialen Rohranordnung 16 ist auch deren Schrägstellung möglich, wie in Fig. 7 dargestellt. Hierbei kann vorzugsweise das Ende der Entnahmeleitung 4 nach oben verlegt werden, so dass der Zugang zur Entnahmeleitung 4 dennoch nahe der Decke, also oben im Innentank 1, angeordnet ist und im Normalbetrieb gasförmiges Medium durch die Entnahmeleitung 4 entnommen werden kann (vgl. Fig. 7). Fig. 7 zeigt somit eine schräg gestellte koaxiale Rohranordnung 16 mit in den Innentank 1 hineingezogenem Vakuum, also Isolationsraum 3, und MLI 17 um die Rohranordnung 16.

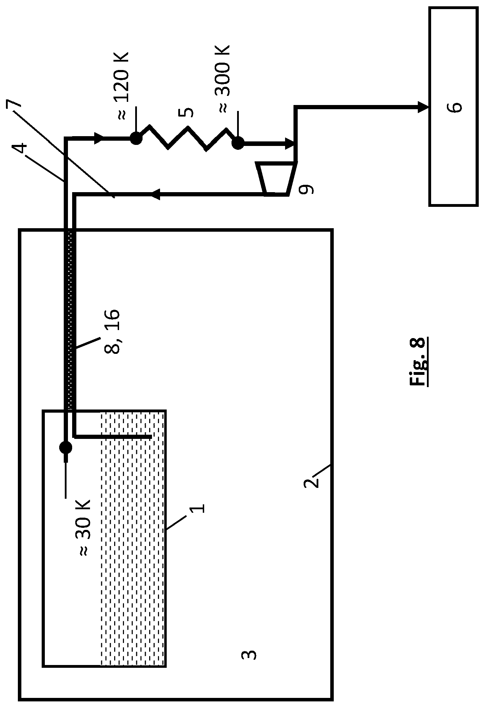

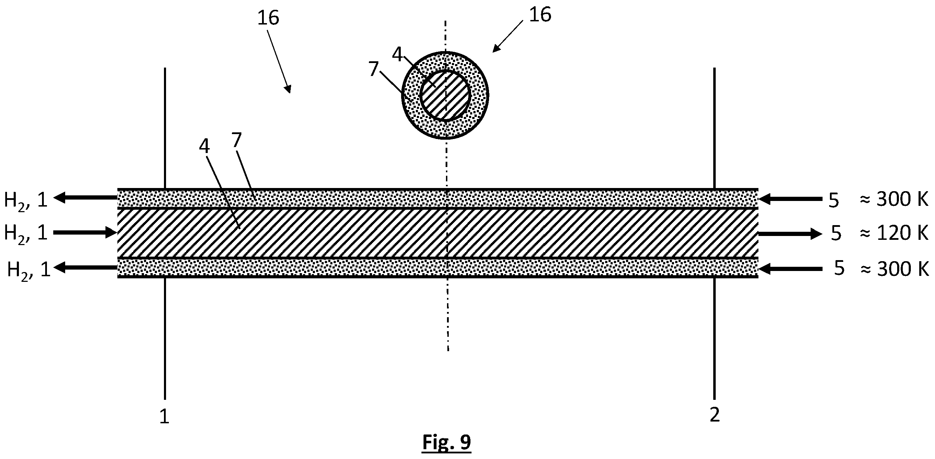

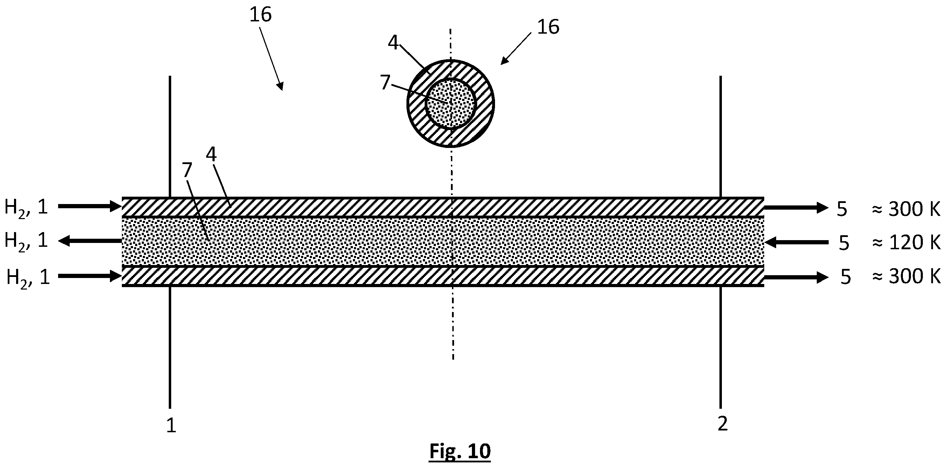

In einer weiteren vorteilhaften Ausführung eines erfindungsgemäßen Kryotanks kann sowohl auf den Innentank-Wärmeübertrager 10 als auch auf den zweiten Wärmeübertrager 12 verzichtet werden. In diesem Fall wird ein Gebläse 9 verwendet, welches einen Teil des Kryogases nach dessen Erwärmung zurück in den Innentank 1 befördert. Dort gibt es dann seine Wärme an das flüssige Kryogas ab und verdampft dieses. Zuvor passiert das warme Kryogas im Gegenstrom das verdampfte austretende kalte Kryogas. Eine Rohranordnung 16 für einen solchen thermischen Kontakt 8 gemäß Fig. 8 ist in Fig. 9 und eine weitere mögliche Ausführung in Fig. 10 dargestellt.

Bei diesem "Offenen System" erfolgt der "Thermische Kontakt" 8 lediglich durch eine koaxiale Anordnung zweier Rohrleitungen. Fig. 8 verdeutlicht dies. Die Gestaltung des Isolationsvakuums 3 und der MLI 17 kann wie in den Fig. 6 und Fig. 7 gezeigt erfolgen. Verdampfter, gasförmiger Wasserstoff (H2) wird über die Entnahmeleitung 4 zum ersten Wärmeübertrager 5 geleitet und von diesem weiter über die Rezirkulierleitung 7 in den flüssigen Wasserstoff rezirkuliert. Dabei kann die Entnahmeleitung 4 radial innerhalb (Fig. 9) oder radial außerhalb (Fig. 10) der Rezirkulierleitung 7 angeordnet sein.

Ein Entnahmeverfahren für einen Kryotank kann dann die Schritte umfassen, dass der aus dem Innentank 1 entnommene Kryogasstrom über eine Entnahmeleitung 4 geführt, in einem ersten Wärmeübertrager 5 erwärmt und ein von diesem abgezweigter Teilgasstrom über ein Gebläse 9 und eine Rezirkulierleitung 7 zurück zum Innentank 1 befördert wird, wobei der vom Innentank 1 kommende und der zum Innentank 1 geleitete Gasstrom in einem thermischen Kontakt stehen und es zu einer Wärmeübertragung zwischen beiden Fluidströmen kommt.

Insgesamt zeigt somit die Erfindung, dass zwischen einem verdampften Kryogasstrom und einem von einem ersten Wärmeübertrager 5 zum Innentank 1 rezirkulierten Teilgasstrom ein guter thermischer Kontakt 8 eingerichtet sein kann. Der rezirkulierte Teilgasstrom vom ersten Wärmeübertrager 5 kommend und zum Innentank 1 strömend kann in diesem mit dem kalten Kryogas gemischt werden. Die Wärmeübertragung zwischen verdampftem, vom Innentank 1 kommenden und rezirkuliertem, zum Innentank 1 führenden Teilgasstrom kann durch eine koaxiale Anordnung zweier Rohre ermöglicht werden.

Der rezirkulierte Teilgasstrom vom ersten Wärmeübertrager 5 kommend und zum Innentank 1 strömend kann über einen InnentankWärmeübertrager 10 geführt und anschließend aus dem Innentank 1 kommend zu einem zweiten Wärmeübertrager 12 geführt werden, sowie stromab eines den Hauptgasstrom androsselden Stellventils 15 mit dem Hauptstrom vereinigt werden, wobei zwischen dem verdampften Kryogasstrom sowie dem vom Innentank-Wärmeübertrager 10 zum zweiten Wärmeübertrager 12 rezirkulierten Teilgasstrom ein guter thermischer Kontakt besteht.

Die Wärmeübertragung zwischen verdampftem Kryogasstrom sowie dem vom Innentank 1 kommenden und zum Innentank 1 geführten Teilgasstrom kann durch eine koaxiale Anordnung dreier Rohre ermöglicht werden.

Das Isolationsvakuum um die koaxiale Rohranordnung 16 herum kann in den Bereich des Innentanks 1 hineingezogen werden. Die koaxiale Rohranordnung 16 kann eine Neigung gegenüber der Horizontalen aufweisen.

Die koaxiale Rohranordnung 16 kann von einer Superisolation umgeben sein.

Der aus dem Innentank 1 entnommene Kryogasstrom kann über eine Leitung geführt, in einem ersten Wärmeübertrager 5 erwärmt werden und ein von diesem abgezweigter Teilgasstrom über ein Gebläse 9 und eine Leitung zurück zum Innentank 1 befördert werden, wobei der vom Innentank 1 kommende und der zum Innentank 1 geleitete Gasstrom in einem thermischen Kontakt 8 stehen und es zu einer Wärmeübertragung zwischen beiden Fluidströmen kommt.

Der aus dem Innentank 1 entnommene Kryogasstrom kann über eine Leitung geführt, in einem ersten Wärmeübertrager 5 erwärmt und ein von diesem abgezweigter Teilgasstrom über eine Leitung zurück zum Innentank 1 befördert werden und der zum Innentank 1 geleitete Teilgasstrom kann einen Innentank-Wärmeübertrager 10 passieren, anschließend über eine Leitung zu einem zweiten Wärmeübertrager 12 geführt werden und stromab eines den Hauptgasstrom androsselden Stellventils 15 mit dem Hauptstrom vereinigt werden, wobei der verdampfte, vom Innentank 1 kommende und zum ersten Wärmeübertrager 5 geleitete Kryogasstrom mit dem zum Innentank 1 zugeführten sowie von diesem abgeführten Teilgasstrom in einem thermischen Kontakt 8 steht und es zu einer Wärmeübertragung zwischen den drei Fluidströmen kommt.

### Bezugszeichenliste

- 1: Innentank
- 2: Außenbehälter
- 3: Isolationsraum
- 4: Entnahmeleitung
- 5: erster Wärmeübertrager
- 6: Verbraucher
- 7: Rezirkulierleitung
- 8: Thermischer Kontakt
- 9: Gebläse
- 10: Innentank-Wärmeübertrager
- 11: Sekundärabschnitt der Rezirkulierleitung
- 12: zweiter Wärmeübertrager
- 13: Ventil
- 14: Drossel
- 15: Stellventil
- 16: Rohranordnung
- 17: Multi-Layer-Insulation (MLI)

## Patentansprüche

1. Kryotank, umfassend eine Entnahmevorrichtung für das im Kryotank gespeicherte Medium, insbesondere Wasserstoff, wobei der Kryotank einen Innentank (1) zur Aufnahme des Mediums umfasst, einen den Innentank (1) umgebenden Außenbehälter (2), sowie einen Isolationsraum (3) zwischen dem Innentank (1) und dem Außenbehälter (2), wobei die Entnahmevorrichtung zumindest eine Entnahmeleitung (4) umfasst, wobei durch die Entnahmeleitung (4) das Medium aus dem Innentank (1) heraus zu einem außerhalb des Innentanks (1) angeordneten und Teil der Entnahmevorrichtung bildenden ersten Wärmeübertrager (5) leitbar ist, wobei nach dem ersten Wärmeübertrager (5) ein Entnahme-Teilstrom zu einem Verbraucher (6) leitbar ist und ein Rezirkulier-Teilstrom über eine Rezirkulierleitung (7) zurück in den Innentank (1) leitbar ist,
wobei der erste Wärmeübertrager (5) außerhalb des Außenbehälters (2) angeordnet ist, wobei die Entnahmeleitung (4) und die Rezirkulierleitung (7) im Isolationsraum (3) so ausgebildet sind, dass ein guter thermischer Kontakt (8) zwischen Entnahmeleitung (4) und Rezirkulierleitung (7) besteht, **dadurch** g e k e n n - z e i c h n e t , dass die Entnahmeleitung (4) und die Rezirkulierleitung (7) im Isolationsraum (3) als thermisch gut miteinander verbundene Rohre ausgebildet sind, dadurch, dass die Entnahmeleitung (4) und die Rezirkulierleitung (7) zumindest abschnittsweise entlang ihrer Erstreckung durch den Isolationsraum (3) koaxiale Rohre bilden.

2. Kryotank nach Anspruch 1,
**dadurch gekennzeichnet , dass** die Entnahmeleitung (4) und die Rezirkulierleitung (7) im Isolationsraum (3) als thermisch gut miteinander verbundene Rohre ausgebildet sind, bevorzugt dadurch, dass die Entnahmeleitung (4) und die Rezirkulierleitung (7) zumindest abschnittsweise entlang ihrer Erstreckung durch den Isolationsraum (3) und zumindest entlang eines Sektors ihres Umfangs einen der Entnahmeleitung (4) und der Rezirkulierleitung (7) gemeinsamen Rohrwandabschnitt aufweisen.

3. Kryotank nach zumindest einem der vorhergehenden Ansprüche, **dadurch gekennzeichnet , dass** die Entnahmeleitung (4) außen geführt ist und die Rezirkulierleitung (7) innen geführt ist.

4. Kryotank nach zumindest einem der vorhergehenden Ansprüche, **dadurch gekennzeichnet , dass** der Rezirkulier-Teilstrom mittels eines Gebläses (9) über die Rezirkulierleitung (7) zurück in den Innentank (1) befördert wird, bevorzugt in Bodennähe, also üblicherweise in flüssiges Medium im Innentank (1).

5. Kryotank nach zumindest einem der Ansprüche 1 bis 3,
**dadurch gekennzeichnet , dass** der Rezirkulier-Teilstrom, der über die Rezirkulierleitung (7) zurück in den Innentank (1) geleitet wird, im Innentank (1) durch einen Innentank-Wärmeübertrager (10) geleitet wird und nach dem InnentankWärmeübertrager (10) über einen Sekundärabschnitt (11) der Rezirkulierleitung (7) zu einem außerhalb des Innentanks (1) angeordneten zweiten Wärmeübertrager (12) geleitet wird.

6. Kryotank nach Anspruch 5,
**dadurch gekennzeichnet , dass** der zweite Wärmeübertrager (12) außerhalb des Außenbehälters (2) angeordnet ist.

7. Kryotank nach zumindest einem der Ansprüche 5 bis 6,
**dadurch gekennzeichnet , dass** die Entnahmeleitung (4) und der Sekundärabschnitt (11) der Rezirkulierleitung (7) im Isolationsraum (3) so ausgebildet sind, dass ein guter thermischer Kontakt (8) zwischen Entnahmeleitung (4) und Sekundärabschnitt (11) der Rezirkulierleitung (7) besteht.

8. Kryotank nach zumindest einem der Ansprüche 5 bis 7,
**dadurch gekennzeichnet , dass** die Entnahmeleitung (4) und die Rezirkulierleitung (7) und der Sekundärabschnitt (11) der Rezirkulierleitung (7) im Isolationsraum (3) als thermisch gut miteinander verbundene Rohre ausgebildet sind, bevorzugt dadurch, dass die Entnahmeleitung (4) und die Rezirkulierleitung (7) und der Sekundärabschnitt (11) der Rezirkulierleitung (7) zumindest abschnittsweise entlang ihrer Erstreckung durch den Isolationsraum (3) koaxiale Rohre bilden.

9. Kryotank nach Anspruch 8,
**dadurch gekennzeichnet , dass** die Entnahmeleitung (4) das zwischen Rezirkulierleitung (7) und Sekundärabschnitt (11) der Rezirkulierleitung (4) eingebettete, mittige Rohr bildet.

10. Kryotank nach zumindest einem der vorhergehenden Ansprüche, **dadurch gekennzeichnet , dass** die thermisch gut miteinander verbundenen Leitungen, insbesondere Rohre, zumindest teilweise, bevorzugt großteils, in einem länglichen, sich in den Innentank (1) hinein erstreckenden Bauraum angeordnet sind, der zum Isolationsraum (3) gehört, wobei bevorzugt die Leitungen und/oder der längliche Bauraum horizontal oder schräg angeordnet sind.

## Claims

1. Cryotank, comprising an extraction device for the medium stored in the cryotank, in particular hydrogen, wherein the cryotank comprises an inner tank (1) for receiving the medium, an outer container (2) enclosing the inner tank (1), and an insulation space (3) between the inner tank (1) and the outer container (2), wherein the extraction device comprises at least one extraction line (4), wherein the medium can be conveyed out of the inner tank (1) through the extraction line (4) to a first heat exchanger (5), arranged outside the inner tank (1) and forming part of the extraction device, wherein an extraction partial flow can be conveyed downstream of the first heat exchanger (5) to a consumer (6) and a recirculation partial flow can beconveyed via a recirculation line (7) back into the inner tank (1),
whereinthe first heat exchanger (5) is arranged outside the outer container (2), the extraction line (4) and the recirculation line (7) being configured in the insulation space (3) so that there is a good thermal contact (8) between the extraction line (4) and the recirculation line (7), **characterized in that** the extraction line (4) and the recirculation line (7) are configured in the insulation space (3) as tubes thermally connected well to one another, by the extraction line (4) and the recirculation line (7) forming coaxial tubes at least in sections along their extent through the insulation space (3).

2. Cryotank according to Claim 1,
**characterized in that** the extraction line (4) and the recirculation line (7) are configured in the insulation space (3) as tubes thermally connected well to one another, preferentially by the extraction line (4) and the recirculation line (7) having a tube wall section common to the extraction line (4) and the recirculation line (7) at least in sections along their extent through the insulation space (3) and at least along a sector of their circumference.

3. Cryotank according to at least one of the preceding claims,
**characterized in that** the extraction line (4) being routed on the outside and the recirculation line (7) being routed on the inside.

4. Cryotank according to at least one of the preceding claims,
**characterized in that** the recirculation partial flow is delivered by means of a blower (9) via the recirculation line (7) back into the inner tank (1), preferentially in the vicinity of the bottom, i.e. usually into liquid medium in the inner tank (1).

5. Cryotank according to at least one of Claims 1 to 3,
**characterized in that** the recirculation partial flow, which is conveyed via the recirculation line (7) back into the inner tank (1), is conveyed in the inner tank (1) through an inner-tank heat exchanger (10) and is conveyed downstream of the inner-tank heat exchanger (10) via a secondary section (11) of the recirculation line (7) to a second heat exchanger (12) arranged outside the inner tank (1).

6. Cryotank according to Claim 5,
**characterized in that** the second heat exchanger (12) is arranged outside the outer container (2).

7. Cryotank according to at least one of Claims 5 to 6,
**characterized in that** the extraction line (4) and the secondary section (11) of the recirculation line (7) are configured in the insulation space (3) so that there is a good thermal contact (8) between the extraction line (4) and the secondary section (11) of the recirculation line (7).

8. Cryotank according to at least one of Claims 5 to 7,
**characterized in that** the extraction line (4) and the recirculation line (7) and the secondary section (11) of the recirculation line (7) are formed in the insulation space (3) as tubes thermally connected well to one another, preferentially by the extraction line (4) and the recirculation line (7) and the secondary section (11) of the recirculation line (7) forming coaxial tubes at least in sections along their extent through the insulation space (3).

9. Cryotank according to Claim 8,
**characterized in that** the extraction line (4) forms the central tube embedded between the recirculation line (7) and the secondary section (11) of the recirculation line (7).

10. Cryotank according to at least one of the preceding claims, **characterized in that** the lines, in particular tubes, thermally connected well to one another are arranged at least partially, preferentially mostly, in an elongate installation space which extends into the inner tank (1) and belongs to the insulation space (3), the lines and/or the elongate installation space preferentially being arranged horizontally or obliquely.

## Revendications

1. Réservoir cryogénique, comprenant un dispositif de prélèvement pour le milieu stocké dans le réservoir cryogénique, en particulier de l'hydrogène, le réservoir cryogénique comprenant un réservoir interne (1) destiné à recevoir le milieu, un récipient externe (2) entourant le réservoir interne (1) ainsi qu'un espace d'isolation (3) entre le réservoir interne (1) et le récipient externe (2), le dispositif de prélèvement comprenant au moins une conduite de prélèvement (4), le milieu pouvant être guidé à travers la conduite de prélèvement (4) hors du réservoir interne (1) vers un premier échangeur de chaleur (5) agencé en dehors du réservoir interne (1) et formant une partie du dispositif de prélèvement, un flux partiel de prélèvement pouvant être guidé vers un consommateur (6) et un flux partiel de recirculation pouvant être guidé par l'intermédiaire d'une conduite de recirculation (7) en retour dans le réservoir interne (1) après le premier échangeur de chaleur (5),
le premier échangeur de chaleur (5) étant agencé en dehors du récipient externe (2), la conduite de prélèvement (4) et la conduite de recirculation (7) étant réalisées dans l'espace d'isolation (3) de telle sorte qu'il existe un bon contact thermique (8) entre la conduite de prélèvement (4) et la conduite de recirculation (7), **caractérisé en ce que** la conduite de prélèvement (4) et la conduite de recirculation (7) sont réalisées, dans l'espace d'isolation (3), sous forme de tubes thermiquement bien reliés l'un à l'autre, par le fait que la conduite de prélèvement (4) et la conduite de recirculation (7) forment des tubes coaxiaux au moins par sections le long de leur étendue à travers l'espace d'isolation (3).

2. Réservoir cryogénique selon la revendication 1,
**caractérisé en ce que** la conduite de prélèvement (4) et la conduite de recirculation (7) sont réalisées dans l'espace d'isolation (3) sous forme de tubes thermiquement bien reliés l'un à l'autre, de préférence par le fait que la conduite de prélèvement (4) et la conduite de recirculation (7) présentent au moins par sections le long de leur étendue à travers l'espace d'isolation (3) et au moins le long d'un secteur de leur périphérie, une section de paroi tubulaire commune à la conduite de prélèvement (4) et à la conduite de recirculation (7).

3. Réservoir cryogénique selon au moins l'une des revendications précédentes,
**caractérisé en ce que** la conduite de prélèvement (4) est guidée à l'extérieur et la conduite de recirculation (7) est guidée à l'intérieur.

4. Réservoir cryogénique selon au moins l'une des revendications précédentes,
**caractérisé en ce que** le flux partiel de recirculation est transporté au moyen d'un ventilateur (9) par l'intermédiaire de la conduite de recirculation (7) en retour dans le réservoir interne (1), de préférence à proximité du fond, c'est-à-dire usuellement dans le milieu liquide dans le réservoir interne (1).

5. Réservoir cryogénique selon au moins l'une des revendications 1 à 3,
**caractérisé en ce que** le flux partiel de recirculation, qui est guidé par l'intermédiaire de la conduite de recirculation (7) en retour dans le réservoir interne (1), est guidé dans le réservoir interne (1) à travers un échange de chaleur (10) de réservoir interne et guidé, après l'échangeur de chaleur (10) de réservoir interne, par l'intermédiaire d'une section secondaire (11) de la conduite de recirculation (7) vers un second échangeur de chaleur (12) agencé en dehors du réservoir interne (1).

6. Réservoir cryogénique selon la revendication 5,
**caractérisé en ce que** le second échangeur de chaleur (12) est agencé en dehors du récipient externe (2).

7. Réservoir cryogénique selon au moins l'une des revendications 5 à 6,
**caractérisé en ce que** la conduite de prélèvement (4) et la section secondaire (11) de la conduite de recirculation (7) sont réalisées dans l'espace d'isolation (3) de telle sorte qu'il existe un bon contact thermique (8) entre la conduite de prélèvement (4) et la section secondaire (11) de la conduite de recirculation (7).

8. Réservoir cryogénique selon au moins l'une des revendications 5 à 7,
**caractérisé en ce que** la conduite de prélèvement (4) et la conduite de recirculation (7) et la section secondaire (11) de la conduite de recirculation (7) sont réalisées dans l'espace d'isolation (3) sous forme de tubes thermiquement bien reliés les uns aux autres, de préférence par le fait que la conduite de prélèvement (4) et la conduite de recirculation (7) et la section secondaire (11) de la conduite de recirculation (7) forment des tubes coaxiaux au moins par sections le long de leur étendue à travers l'espace d'isolation (3).

9. Réservoir cryogénique selon la revendication 8,
**caractérisé en ce que** la conduite de prélèvement (4) forme le tube central intégré entre la conduite de recirculation (7) et la section secondaire (11) de la conduite de recirculation (4).

10. Réservoir cryogénique selon au moins l'une des revendications précédentes, **caractérisé en ce que** les conduites thermiquement bien reliées les unes aux autres, en particulier des tubes, sont agencées au moins en partie, de préférence en grande partie, dans un espace de construction longitudinal, s'étendant dans le réservoir interne (1), lequel espace appartient à l'espace d'isolation (3), les conduites et/ou l'espace de construction longitudinal étant de préférence agencés horizontalement ou en biais.
